(19) Europäisches Patentamt
European Patent Office
Office européen des brevets

(11) **EP 2 434 333 A1**

(12) **EUROPEAN PATENT APPLICATION**
published in accordance with Art. 153(4) EPC

(43) Date of publication:
    **28.03.2012 Bulletin 2012/13**

(51) Int Cl.:
    *G02F 1/1335* $^{(2006.01)}$    *G02F 1/1368* $^{(2006.01)}$
    *G09F 9/30* $^{(2006.01)}$

(21) Application number: **10777476.2**

(22) Date of filing: **15.02.2010**

(86) International application number:
    **PCT/JP2010/000909**

(87) International publication number:
    **WO 2010/134236 (25.11.2010 Gazette 2010/47)**

(84) Designated Contracting States:
    **AT BE BG CH CY CZ DE DK EE ES FI FR GB GR HR HU IE IS IT LI LT LU LV MC MK MT NL NO PL PT RO SE SI SK SM TR**

(30) Priority: **18.05.2009 JP 2009119930**

(71) Applicant: **Sharp Kabushiki Kaisha**
    **Osaka-shi, Osaka 545-8522 (JP)**

(72) Inventors:
    • **MINOURA, Kiyoshi**
      **Osaka-shi, Osaka 545-8522 (JP)**
    • **ASAOKA, Yasushi**
      **Osaka-shi, Osaka 545-8522 (JP)**

(74) Representative: **Müller - Hoffmann & Partner Patentanwälte**
    **Innere Wiener Strasse 17**
    **81667 München (DE)**

(54) **ACTIVE MATRIX SUBSTRATE AND LIQUID CRYSTAL DISPLAY DEVICE USING THE SAME**

(57)    An active matrix substrate includes: a insulating substrate; a pixel including a memory formed from a plurality of active elements on the insulating substrate; an interlayer insulating film formed on the insulating substrate and the plurality of active elements; and a reflective electrode on the interlayer insulating film, wherein, when light is entered from a direction of -30° to a normal line of the active matrix substrate and intensity of a reflected light thereof is measured, the following expression is satisfied: $0.02 < I(35°) / I(30°) < 0.1$, where $I(\theta°)$ represents intensity of the reflected light measured in a direction of $\theta$ degree(s) to the normal line of the active matrix substrate.

F I G . 1

**Description**

Technical Field

The present invention relates to an active matrix substrate and a liquid crystal display device provided therewith.

Background Art

Reflective display devices utilizing ambient light require no backlight, so that the display devices can be driven with low power consumption, and have a flat screen display and light weight. In recent years, these reflective display devices are particularly expected to contribute as display devices for a mobile phone, an electronic book, and the like.

Among the reflective display devices, a reflective liquid crystal display (LCD) device is widely used. In the reflective LCD device, there are a mode for realizing a sufficient black display and a mode for a sufficient white display. In the mode for realizing the black display, a polarization plate and a liquid crystal layer for adjusting polarization state of light passing the liquid crystal layer are used. In the mode for realizing the white display, the liquid crystal layer for adjusting a scattering state of the light passing the liquid crystal layer is used without using the polarization plate.

As the mode with no polarization plate, there are known a dynamic scattering mode (DSM) utilizing scattering caused by convection of liquid crystal molecules, a polymer dispersed liquid crystal (PDLC) mode for realizing the scattering state by dispersing liquid crystal droplets on a polymeric membrane, or a polymer network liquid crystal (PNLC) mode for realizing a scattering state by forming a polymer network in the liquid crystal layer.

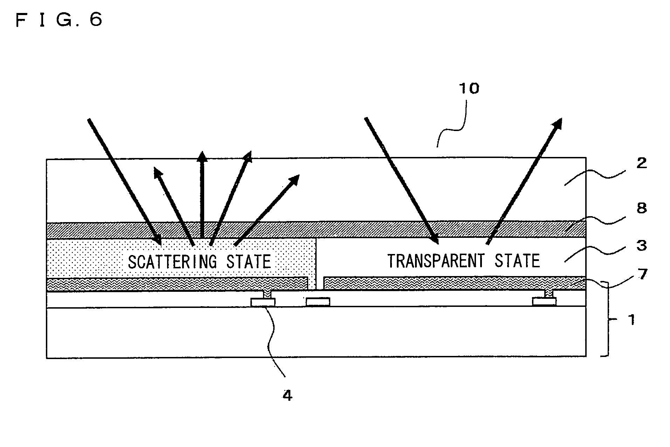

As shown in FIG. 6, a general reflective LCD device 10 employing the mode with no polarization plate is formed such that a liquid crystal layer 3 is provided between an active matrix substrate 1 and a front glass substrate 2. The active matrix substrate 1 includes TFT elements 4 and reflective electrodes 7, and the front glass substrate 2 includes the transparent electrode 8.

When a voltage is not applied on the liquid crystal layer 3, the liquid crystal layer 3 is in the scattering state. Light entered from the outside performs a forward scattering, and then reflects on the reflective electrode 7. Therefore, the liquid crystal layer 3 serves as the white display. Meanwhile, when a voltage is applied on the liquid crystal layer 3, the liquid crystal layer 3 enters a transparent state and the reflective electrode 7 serves as a mirror. Light entered from the outside is not scattered on the liquid crystal layer 3, and then reflects on the reflective electrode 7 and exits to the outside. That is, the liquid crystal layer 3 performs the white display when the liquid crystal layer 3 is in the scattering state, and the liquid crystal layer 3 performs the black display when the liquid crystal layer 3 is in the mirror state. When the area functioning as the black display is large, reflected glare would occur, thereby showing a surrounding scene and an observer in a background of letters and the like being displayed.

Patent Literature 1 discloses a technique for an optical film for having a display surface subjected to an anti-glare coating in order to prevent such reflected glare sufficiently and fading.

Patent Literature 2 also discloses an anti-glare film having a anti-glare function similar to that of the optical film disclosed in Patent Literature 1.

Citation List

Patent Literature 1
Japanese Patent Application Publication, Tokukai, No. 2002-365410 A
Patent Literature 2
Japanese Patent Application Publication, Tokukai, No. 2009-122371 A

Summary of Invention

Technical Problem

However, the use of the optical film disclosed in Patent Literature 1 causes increase in member and production process, to thereby inevitably increase in cost.

An object of the present invention is to provide (i) an active matrix substrate, which can be formed without adding a new member or process and increasing cost, prevent the reflected glare, and provide an excellent display quality, and (ii) a liquid crystal display (LCD) device provided with the active matrix substrate.

Solution to Problem

An active matrix substrate according to the present invention includes: an insulating substrate; a pixel including a memory formed from a plurality of active elements on the insulating substrate; an interlayer insulating film formed on the insulating substrate and the plurality of active elements; and a reflective electrode on the interlayer insulating film, the reflective electrode having difference in height caused by unevenness on a surface of the reflective electrode within a range from 100 nm to 500 nm.

Employing this configuration enables an appropriate control on scattering of external light caused by the reflective electrode.

Further, an active matrix substrate according to the present invention includes: a insulating substrate; a pixel including a memory formed from a plurality of active elements on the insulating substrate; an interlayer insulating film formed on the insulating substrate and the plurality of active elements; and a reflective electrode on the interlayer insulating film, wherein, when light is entered from a direction of -30˚ with respect to a normal line of the active matrix substrate and intensity of a reflected light thereof is measured, the following expression is satisfied: $0.02 < I(35˚) / I(30˚) < 0.1$, where $I(\theta˚)$ represents intensity of the reflected light measured in a direction of $\theta$ degree(s) with respect to the normal line of the active matrix substrate.

Furthermore, in the active matrix substrate according to the present invention, the active matrix substrate may satisfy the following expression: $I(40˚) / I(30˚) < 0.02$.

Employing this configuration enables an appropriate control on scattering of external light caused by the reflective electrode.

Advantageous Effects of Invention

An active matrix substrate according to the present invention includes: an insulating substrate; a pixel including a memory formed from a plurality of active elements on the insulating substrate; an interlayer insulating film formed on the insulating substrate and the plurality of active elements; and a reflective electrode on the interlayer insulating film, the reflective electrode having difference in height caused by unevenness on a surface of the reflective electrode within a range from 100 nm to 500 nm.

Further, when light is entered from a direction of -30˚ with respect to a normal line of the active matrix substrate and intensity of a reflected light thereof is measured, the following expression is satisfied: $0.02 < I(35˚) / I(30˚) < 0.1$, where $I(\theta˚)$ represents intensity of the reflected light measured in a direction of $\theta$ degree(s) with respect to the normal line of the active matrix substrate.

Therefore, an appropriate control on scattering of the external light caused by the reflective electrode can be performed.

The active matrix substrate of the present invention is used in the reflective LCD device of the present invention.

Therefore, reflected glare created on the reflective LCD device can be blurred appropriately, and the reflective LCD device provides an excellent display quality.

Brief Description of Drawings

FIG. 1

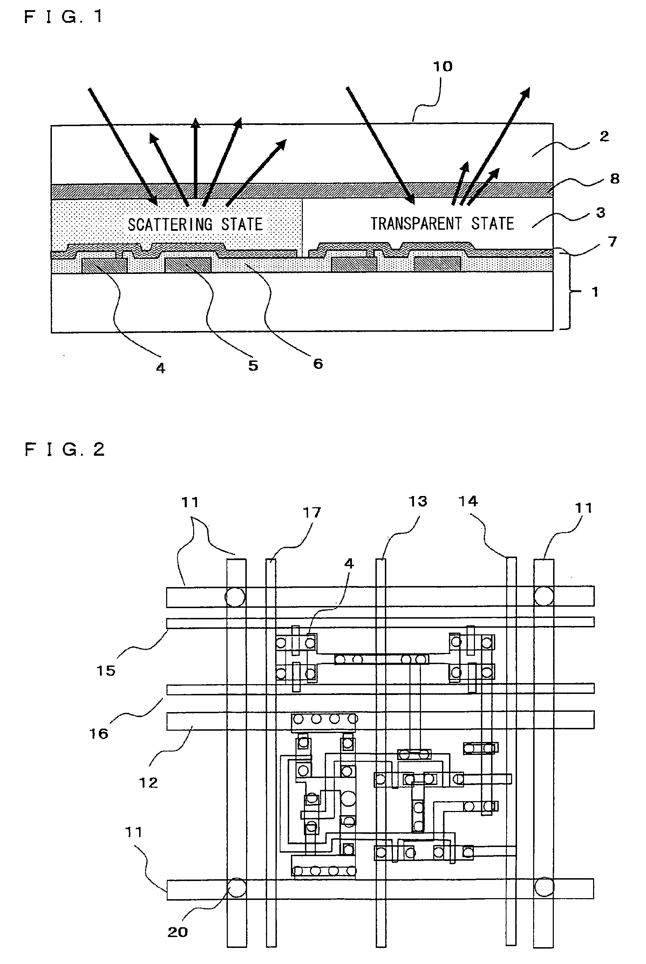

FIG. 1 is a schematic sectional view of a reflective LCD device according to Embodiment 1.
FIG. 2
FIG. 2 is a plan view of an active matrix substrate according to an example of the present invention.
FIG. 3

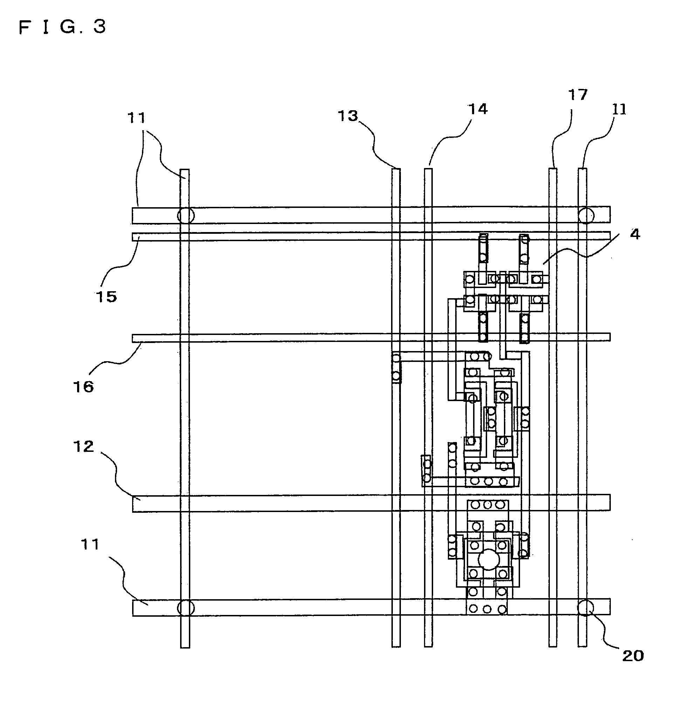

FIG. 3 is a plan view of an active matrix substrate according to another example of the present invention.
FIG. 4

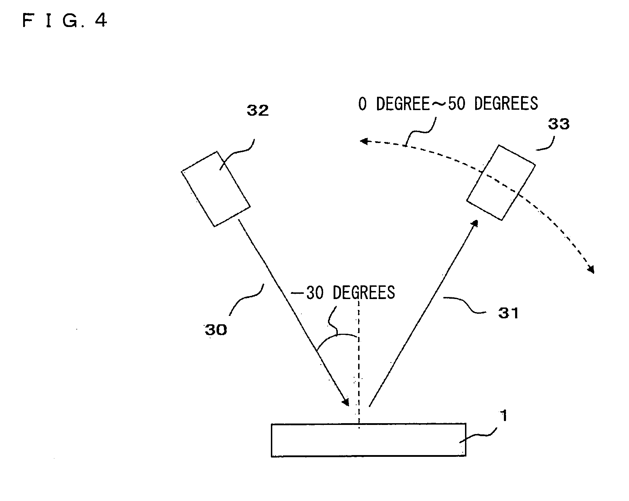

FIG. 4 is a schematic view of a device for measuring scattering characteristics.
FIG. 5

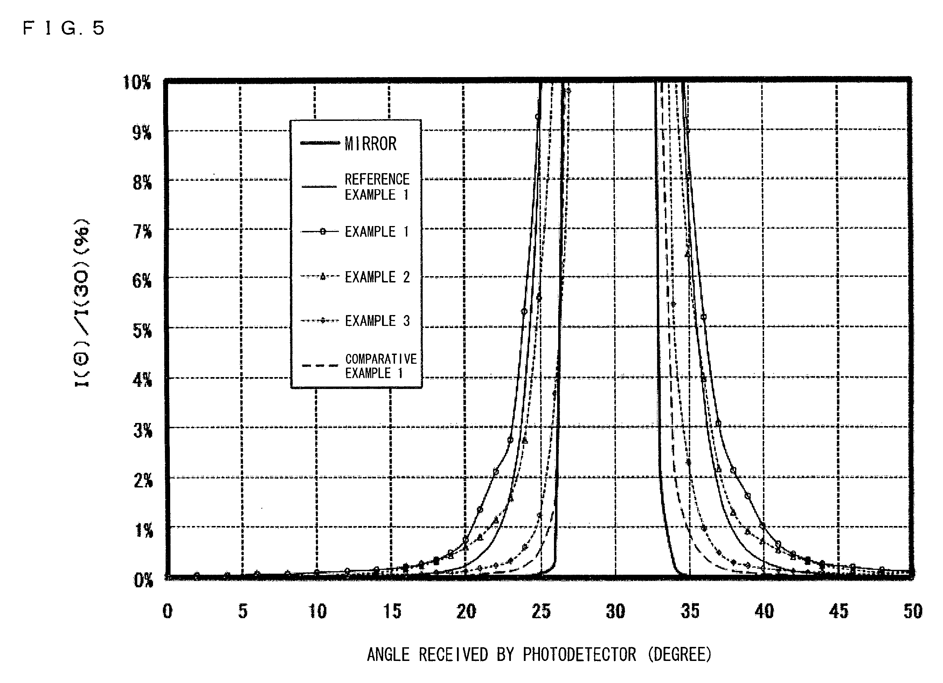

FIG. 5 is a graph showing a result of measuring the scattering characteristics.
FIG. 6
FIG. 6 is a schematic sectional view of a conventional reflective LCD device.

Description of Embodiment

Some embodiments of an active matrix substrate 1 and a reflective LCD device 10 of the present invention will be described in detail below with reference to the drawings.

FIG. 1 shows a sectional view of the reflective LCD device 10 provided with the active matrix substrate 1 of the present invention. In the reflective LCD device 10, the liquid crystal layer 3 is provided between the active matrix substrate 1 and a front glass substrate 2.

TFT elements 4 and wirings 5 are formed in the active matrix substrate 1. An interlayer insulating film 6 is formed so as to cover the TFT elements 4 and the wirings 5. A reflective electrode 7 is formed on each pixel. The reflective electrodes 7 are connected to drain electrodes of the TFT elements 4 via through holes formed in the interlayer insulating film 6.

The TFT elements 4 may be formed by a well-known method and made of, for example, amorphous silicon or polycrystalline silicon. A source electrode, the drain electrode, and the wirings 5 may be formed from well-known materials such as titanium (Ti), molybdenum (Mo), or aluminum (Al). The interlayer insulating film 6 is favorably formed from organic resin materials having photosensitivity such as acrylic resin, polymide resin, or novolac resin. The reflective electrode 7 can be made of silver or alminum that has high reflectance.

Herein, the reflective electrode 7 needs an uneven surface in order to cause the scattering on the reflective electrode 7. In the present invention, unevenness formed by the TFT elements 4 and the wirings 5 is not completely planarized by the interlayer insulating film 6, that is, unevenness remains to some extent on the reflective electrode 7, thereby giving the reflective electrode 7 the uneven surface. From this reason, the unevenness on the reflective electrode 7 can be formed without adding a member or process, therefore increase in cost can be prevented. According to an evaluation of reflected glare mentioned below, difference in height caused by unevenness on the reflective electrode 7 falls preferably within the range from 100 nm to 500 nm in order to obtain the scattering on the reflective electrode 7 appropriately. Further, unevenness formed by the TFT elements and the wirings becomes small as a film thickness of the interlayer insulating film 6 is thickened, whereas the unevenness becomes large as the film thickness thereof is thinned. Normally, the difference in height of a substrate including the TFT elements and the wirings is about 1.5 $\mu$m at a maximum, so that a thickness of the interlayer insulating film requires 1.5 $\mu$m or more. Thus, the interlayer insulating film 6 preferably has the film thickness not less than 1.5 $\mu$m but not more than 3.5 $\mu$m, and more preferably not less than 2.5 $\mu$m but not more than 3.5 $\mu$m.

The unevenness on the reflective electrode 7 is formed by the TFT elements 4 and the wirings 5. Therefore, when an area in which the TFT elements 4 and the wirings 5 are formed is small with respect to a pixel area, a part occurring the scattering of the external light becomes small, and then the sufficient scattering cannot be obtained. Accordingly, the ratio of the area in which the TFT elements 4 and the wirings 5 are formed requires one-third or more of the pixel area. When the ratio of the area is less than one-third thereof, a part of the interlayer insulating film 6, in which the TFT elements 4 and the wirings 5 are not formed, is partially patterned, hence unevenness is formed on the interlayer insulating film 6, thereby increasing the scattering surface area.

The active matrix substrate 1 thus formed and the front glass substrate 2 having the transparent electrode 8 formed over a surface thereof face to each other so as to face their electrodes, and sandwich the liquid crystal layer 3, to thereby accomplish the reflective LCD device 10. Well-known materials of the transparent electrode such as indium tin oxide (ITO) or indium zinc oxide (IZO) can be used as a material of the transparent electrode 8. Further, PNM-170 (trade name) produced by DIC Corporation can be used as a material of the liquid crystal layer 3.

Next, an operating principle of the reflective LCD device 10 thus formed will be described. When a voltage is not applied between the reflective electrode 7 and the transparent electrode 8, the liquid crystal layer 3 is in the scattering state. Light entered from the outside performs a forward scattering, and then reflects on the reflective electrode 7. Therefore, the reflective LCD device 10 functions as the white display. When the voltage is applied between the reflective electrode 7 and the transparent electrode 8, the liquid crystal layer 3 is in a transparent state. Light entered from the outside reflects on the reflective electrode 7, and then exits to the outside. At this time, because of unevenness formed on the surface of the reflective electrode 7, the reflected light is slightly scattered, and reflected images of a surrounding scene and an observer are blurred. Therefore, displayed letters and the like can be read easily, and the reflective LCD device 10 provides an excellent display quality.

[Example 1]

FIG. 2 shows a plan view of an active matrix substrate according to Example 1 of the present invention. VLAs (line electrically connecting to an external terminal having a potential of 0 V) 11 are formed so that the facing VLAs are in parallel to each other longitudinally or laterally. A part surrounded by the VLAs 11 is one sub-pixel. Each of the sub-pixels includes two static RAMs formed from the twelve TFT elements 4. In this example, the TFT elements 4 and the wirings are formed over substantially all a surface of the sub-pixel. A Vdd 13 and a Vss 14 are wirings for supplying power for the static RAM. A GL 15 and a GLB 16 are wirings for ground potential. An SL 17 is a wiring for supplying an image signal. In accordance with the signal supplied through the SL17, the reflective electrode is connected to the VLA 11 or a VLB (line electrically connecting to an external terminal having a potential of 5 V) 12. When the reflective electrode is connected to the VLA 11, the potential of the reflective electrode becomes 0 V. When the reflective electrode is connected to the VLB 12, the potential thereof becomes 5 V. Note that, the electrodes of the TFT elements 4 are connected correspondingly with the wiring through respective connecting through holes 20 as necessary.

After the TFT elements were formed, the acrylic interlayer insulating film was formed so as to have the film thickness of 2.5 $\mu$m. Then, a film having the thickness of 100 nm was made of Al as the reflective electrode. Furthermore, a parallel alignment film was applied on the Al electrodes in order to form the reflective LCD device. In that state, measurement of reflection characteristics of the active matrix substrate was performed.

The measurement of the reflection characteristics was performed with use of a device shown in FIG. 4. The active matrix substrate 1 was irradiated, from a direction of -30˚ with respect to a normal line of the active matrix substrate 1, by a parallel light 30 emitted from a light source 32 while a position of a photodetector 33 was changed between 0˚ and 50˚ including an angle causing a specular reflection on the active matrix substrate 1. Then, output of the photodetector 33 caused by receiving the reflected light 31 was measured. In this example, a receiver lens having an angle of aperture of 2.5˚ is used and a measurement spot diameter is set to Φ2mm.

An ITO electrode was formed on the front glass substrate as the transparent electrode, and the parallel alignment film was further formed on the ITO electrode. The active matrix substrate and the front glass substrate were attached so as to face their parallel alignment films to each other, and a liquid crystal material (PNM-170 (trade name) produced by DIC Corporation) was vacuum-injected between the attached films, then the reflective LCD device was accomplished. A thickness of the liquid crystal layer herein is adjusted by a spacer so as to be 3 $\mu$m. The liquid crystal material may be injected through instillation instead of vacuum-injection. Thereafter, the two substrates providing the liquid crystal material therebetween was irradiated for 2 minutes by ultraviolet rays emitted from an ultraviolet exposure device with use of D bulb produced by Fusion UV Systems Inc., the ultraviolet rays having intensity of 50 mW/cm$^2$ and center wavelength of 365 nm. Then, the reflective LCD device was accomplished. The ultraviolet irradiation was performed for forming a polymer network necessary for PNLC mode and curing the sealing resin.

The reflective LCD device thus formed was caused to display a letter, and the display and the ratio of display to reflected glare was visually confirmed. Further, reflectance of integrating sphere except for specular reflected light of the liquid crystal layer in a transmission state was measured by an SCE mode of CM2002 (trade name) produced by KONICA MINOLTA HOLDINGS, INC.

[Example 2]

FIG. 3 shows a plan view of an active matrix substrate according to Example 2. Example 2 is different from Example 1 in that, in this example, the TFT elements and the wirings were formed in a range of about one-third of the sub-pixels and the surface of the Al electrodes was planarized in the rest of the sub-pixels. The active matrix substrate and the reflective LCD device were prepared and evaluated in the same way as in Example 1.

[Example 3]

The active matrix substrate and the reflective LCD device and measurement thereof in Example 3 were prepared in the same way as in Example 2 except for setting 3.5 $\mu$m as the film thickness of the interlayer insulating film.

(Comparative Example 1)

The active matrix substrate and the reflective LCD device and measurement thereof in Comparative Example 1 were prepared in the same way as in Example 2 except for setting 4.5 $\mu$m as the film thickness of the interlayer insulating film.

(Reference Example 1)

In Reference Example 1, the measurement of the reflection characteristics was performed with use of a sample that is formed so that Al having a thickness of 200 nm is vapor-deposited on an optical film (AG750 (trade name) produced by NITTO DENKO CORPORATION), and the optical film being subjected to anti-glare coating used for a liquid crystal television.

(Evaluation result)

Table 1 shows an evaluation result of the reflective LCD devices according to Examples 1 to 3 and Comparative Example 1.

[Table 1]

| | Film thickness of interlayer insulating film | Area Ratio | Unevenness on reflective electrode | Display quality | Reflectance of integrating sphere |
|---|---|---|---|---|---|
| Ex. 1 | 2.5 μm | Substantially all surface | 500 nm | ○ | 5.7% |
| Ex. 2 | 2.5 μm | About 1/3 | 500 nm | ○ | 4.8% |
| Ex. 3 | 3.5 μm | About 1/3 | 100 nm | △ | 2.1% |
| Com. Ex. 1 | 4.5 μm | About 1/3 | 50 nm | × | 1.5% |

Abbreviation:

Ex. stands for Example.

Com. Ex. stands for Comparative Example.

"Area Ratio" means "Ratio of area in which TFT elements and wirings are formed"

Herein, the display quality was evaluated under a condition in which illuminance on a panel surface is 500 lux in a room and a fluorescent is lighted, and was evaluated by watching in a state in which a reflected glare of an observer's face is created. The mark ○ represents such an extent that the reflected image does not bother the displayed letter, the mark △ indicates such an extent that the reflected image slightly bothers the displayed letter but the letter is still read, and the mark x represents such an extent that the reflected image bothers the displayed letter and the letter is distinct. The unevenness on the reflective electrode was measured by a stylus profilometer.

As is apparent from Table 1, the display quality is sufficient when the interlayer insulating film falls within the range from 2.5 μm to 3.5 μm and the unevenness on the reflective electrode falls within the range from 100 nm to 500 nm.

FIG. 5 shows a result of the measurement of the reflection characteristics. The display quality measured with use of the active matrix substrate according to each of Examples 1 to 3 is sufficient when a value obtained by calculating I(35˚) / I(30˚) falls within the range from 2% to 10%. A value obtained by calculating I(35˚) / I(30˚) in Example 1 is substantially the same value as that in Reference Example 1. Further, a value obtained by calculating I(40˚) / I(30˚) is 2% or less. Herein, I(θ degree(s)) represents intensity of the reflected light measured in a direction of θ degree(s) with respect to the normal line of the active matrix substrate.

As described above, as same as the liquid crystal television, the reflective LCD device provided with the active matrix substrate according to the present invention has sufficient display quality such an extent that the reflected image does not bother the displayed letter.

Note that, in the active matrix substrate according to the present invention, a region in which a plurality of active elements and wirings are formed occupies preferably one-third or more of the pixel area.

When the region in which the active elements and the wirings are formed occupies less than one-third of the pixel area, the scattering of the external light is insufficient.

Furthermore, in the active matrix substrate according to the present invention, the interlayer insulating film may be patterned on a part on which the plurality of active elements and the wirings are not formed.

The scattering of the external light can be controlled by employing this configuration with high accuracy.

Furthermore, in the active matrix substrate according to the present invention, the interlayer insulating film may have a thickness not less than 1.5 μm but not more than 3.5 μm.

A reflective liquid crystal display element according to the present invention includes an active matrix substrate according to the present invention; a substrate having a transparent electrode; and a liquid crystal layer being provided between the active matrix substrate and the substrate having the transparent electrode. Further, the liquid crystal layer that selects any one of a scattering state and a non-scattering state with respect to entering light in accordance with an electrical signal may be used. Furthermore, the liquid crystal layer having any one of a structure in which liquid crystal droplets are dispersed on a polymeric membrane and a structure in which a polymer network is formed in the liquid crystal layer may be used.

The reflected glare created on the reflective LCD device can be blurred appropriately by employing this configuration, and the reflective LCD device provides an excellent display quality.

Further, in the active matrix substrate according to the present invention, an unevenness on a surface of the reflective electrode can be mainly formed by the active elements and the wirings.

Industrial Applicability

The present invention provides an useful active matrix substrate and liquid crystal display device provided therewith.

Reference Signs List

| | |
|---|---|
| 1 | active matrix substrate |
| 2 | front glass substrate |
| 3 | liquid crystal layer |
| 4 | TFT element |
| 5 | wiring |
| 6 | interlayer insulating film |
| 7 | reflective electrode |
| 8 | transparent electrode |
| 10 | reflective LCD device |
| 11 | VLA |
| 12 | VLB |
| 13 | Vdd |
| 14 | Vss |
| 15 | GL |
| 16 | GLB |
| 17 | SL |
| 20 | connecting through hole |
| 30 | parallel light |
| 31 | reflected light |
| 32 | light source |
| 33 | photodetector |

**Claims**

1.  An active matrix substrate, comprising:

    an insulating substrate;
    a pixel including a memory formed from a plurality of active elements on the insulating substrate;
    an interlayer insulating film formed on the insulating substrate and the plurality of active elements; and
    a reflective electrode on the interlayer insulating film, the reflective electrode having difference in height caused by unevenness formed on a surface of the reflective electrode within a range from 100 nm to 500 nm.

2.  An active matrix substrate, comprising:

    a insulating substrate;
    a pixel including a memory formed from a plurality of active elements on the insulating substrate;
    an interlayer insulating film formed on the insulating substrate and the plurality of active elements; and
    a reflective electrode on the interlayer insulating film,
    wherein, when light is entered from a direction of -30˚ with respect to a normal line of the active matrix substrate and intensity of a reflected light of the light is measured, the following expression is satisfied:

$$0.02 < I(35°) / I(30°) < 0.1,$$

    where $I(\theta')$ represents intensity of the reflected light measured in a direction of $\theta$ degree(s) with respect to the normal line of the active matrix substrate.

3. The active matrix substrate according to claim 2, wherein the active matrix substrate satisfies the following expression:

$$I(40°) \; / \; I(30°) \; < \; 0.02.$$

4. The active matrix substrate according to any one of claims 1 to 3, wherein a region in which the plurality of active elements and wirings are formed occupies one-third or more of the pixel area.

5. The active matrix substrate according to any one of claims 1 to 4, wherein the interlayer insulating film is patterned on a part on which the plurality of active elements and the wirings are not formed.

6. The active matrix substrate according to any one of claims 1 to 5, wherein the interlayer insulating film has a thickness not less than 1.5 $\mu$m but not more than 3.5 $\mu$m.

7. A reflective liquid crystal display element, comprising:

   an active matrix substrate according to any one of claims 1 to 6;
   a substrate having a transparent electrode; and
   a liquid crystal layer being provided between the active matrix substrate and the substrate having the transparent electrode.

8. The reflective liquid crystal display element according to claim 7, wherein the liquid crystal layer selects any one of a scattering state and a non-scattering state with respect to entering light in accordance with an electrical signal.

9. The reflective liquid crystal display element according to claim 8, wherein the liquid crystal layer that selects any one of the scattering state and the non-scattering state with respect to entering light in accordance with an electrical signal has a structure in which liquid crystal droplets are dispersed on a polymeric membrane or a structure in which a polymer network is formed in the liquid crystal layer.

10. The active matrix substrate according to claim 1, an unevenness on the surface of the reflective electrode is mainly formed by the plurality of active elements and wirings.

FIG. 1

FIG. 2

F I G. 3

F I G. 4

32

0 DEGREE～50 DEGREES

33

−30 DEGREES

30

31

1

F I G . 5

EP 2 434 333 A1

F I G. 6

SCATTERING STATE

TRANSPARENT STATE

<table>
<tr><td colspan="2">**INTERNATIONAL SEARCH REPORT**</td><td>International application No.<br><br>PCT/JP2010/000909</td></tr>
</table>

A. CLASSIFICATION OF SUBJECT MATTER
*G02F1/1335*(2006.01)i, *G02F1/1368*(2006.01)i, *G09F9/30*(2006.01)i

According to International Patent Classification (IPC) or to both national classification and IPC

B. FIELDS SEARCHED

Minimum documentation searched (classification system followed by classification symbols)
G02F1/1335, G02F1/1368, G09F9/30

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 8-286170 A (Toshiba Corp.),<br>01 November 1996 (01.11.1996),<br>paragraphs [0148] to [0154]; fig. 12<br>& US 5712652 A1 & KR 10-177016 B | 1,4-10<br>2,3 |
| Y<br>A | JP 2007-101843 A (Mitsubishi Electric Corp.),<br>19 April 2007 (19.04.2007),<br>paragraphs [0020] to [0025]; fig. 3<br>(Family: none) | 1,4-10<br>2,3 |
| Y<br>A | JP 2002-357844 A (NEC Corp.),<br>13 December 2002 (13.12.2002),<br>paragraphs [0042] to [0047]; fig. 9, 10<br>& US 2002/0140887 A1 & TW 569070 B<br>& KR 2002/77252 A & CN 1437055 A | 5<br>1-10 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>11 March, 2010 (11.03.10) | Date of mailing of the international search report<br>23 March, 2010 (23.03.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/000909 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2007-322889 A  (Citizen Holdings Co., Ltd.),<br>13 December 2007 (13.12.2007),<br>paragraph [0020]<br>& US 2009/0135334 A1    & CN 101351740 A | 8,9<br>1-10 |

Form PCT/ISA/210 (continuation of second sheet) (July 2009)

**EP 2 434 333 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002365410 A

- JP 2009122371 A